# FASCICULE DE BREVET EUROPEEN

(11) **EP 4 067 674 B1**
(45) Date de publication et mention de la délivrance du brevet: **24.05.2023**
(21) Numéro de dépôt: 22161525.5
(22) Date de dépôt: 11.03.2022
(51) Int. Cl.: F16B 11/00, F16B 5/00

(54) **ASSEMBLAGE AYANT DEUX ELEMENTS ASSEMBLES PAR UN JOINT DE COLLE MUNI DE TUNNELS OBTURES, VEHICULE COMPORTANT UN TEL ASSEMBLAGE ET PROCEDES DE SOLIDARISATION ET DE DESOLIDARISATION D'UN TEL ASSEMBLAGE**
BAUGRUPPE MIT ZWEI ELEMENTEN, DIE DURCH EINE KLEBEVERBINDUNG MIT VERSCHLOSSENEN TUNNELN VERBUNDEN SIND, FAHRZEUG MIT EINER SOLCHEN BAUGRUPPE UND VERFAHREN ZUM VERBINDEN UND LÖSEN EINER SOLCHEN BAUGRUPPE
ASSEMBLY WITH TWO ELEMENTS ASSEMBLED BY AN ADHESIVE SEAL PROVIDED WITH FILLED TUNNELS, VEHICLE COMPRISING SUCH AN ASSEMBLY AND METHODS FOR SECURING AND RELEASING SUCH AN ASSEMBLY

(30) Priorité: 30.03.2021 FR 2103286
(43) Date de publication de la demande: 05.10.2022
(73) Titulaire: Airbus Helicopters, 13725 Marignane Cedex (FR)
(72) Inventeur: NEGREL, Florence, 13400 Aubagne (FR); FRUITET, Pierre, 30170 Pompignan (FR); BEDUS, Olivier, 13121 Aurons (FR)
(74) Mandataire: GPI Brevets

(56) Documents cités:
- FR-A1- 3 068 404
- US-A1- 2005 200 163

## Description

La présente invention concerne un assemblage ayant deux éléments assemblés par un joint de colle muni de tunnels obturés, ainsi qu'un véhicule comportant un tel assemblage et des procédés de solidarisation et de désolidarisation d'un tel assemblage.

L'invention se rapporte notamment au domaine des assemblages entre une structure portante d'un véhicule et un élément comportant un panneau au moins partiellement translucide ou transparent, tel qu'un parebrise ou un hublot. En particulier, le véhicule peut être un aéronef, l'assemblage étant soumis à des sollicitations mécaniques et/ou vibratoires importantes.

Usuellement, un parebrise d'une automobile peut être fixé à une structure porteuse d'un véhicule par un joint de colle. Le joint de colle peut de plus rendre la liaison étanche à l'air et à l'eau. Pour enlever le joint de colle afin de changer le parebrise par exemple, il convient de découper ce joint de colle. Un fil dénommé parfois « corde à piano » est inséré en force au sein du joint de colle puis déplacé afin de découper ce joint de colle. Une autre technique consiste à insérer un couteau vibrant entre le parebrise et la structure portante pour découper le joint de colle.

Sur un aéronef sujet à des sollicitations qui n'existent pas au sein d'une automobile, par exemple une dépression entre les espaces intérieur et extérieur de l'aéronef, le joint de colle peut être particulièrement résistant. Un mastic de type aéronautique dit "PR" à base de caoutchouc liquide polysulfure apte à polymériser à température ambiante peut être utilisé. De plus, les joints de colle utilisés dans le domaine aéronautique peuvent présenter une largeur importante de l'ordre de deux à dix centimètres et une faible épaisseur de l'ordre de trois millimètres. Il est alors difficile de positionner et d'utiliser un couteau vibrant ou un fil pour décoller le panneau de la structure portante sans endommager la structure portante et/ou le panneau.

En outre, l'assemblage peut également comporter au moins un obstacle complexifiant le découpage de ce joint de colle. Un tel obstacle peut prendre la forme d'une excroissance telle qu'une entretoise noyée dans le joint de colle. Par ailleurs, le joint de colle peut présenter une épaisseur prédéterminée qui est avantageusement sensiblement constante. L'excroissance s'étend alors au moins partiellement dans l'épaisseur du joint de colle entre le panneau et la structure porteuse du véhicule désigné par la suite « portant ». Par ailleurs, une vis peut serrer le panneau contre l'excroissance en étant vissée à cette excroissance.

Selon un autre exemple, un obstacle peut prendre la forme d'une surface gauche du portant ou du parebrise. En effet, la structure porteuse et le parebrise peuvent chacun comprendre une zone non plane comportant un galbe prononcé par rapport à d'autres zones.

Cependant, si de tels assemblages sont très efficaces pour résister à des sollicitations mécaniques et/ou vibratoires, le remplacement d'un panneau peut se révéler délicat. La présence d'un obstacle, par exemple une zone galbée ou une excroissance noyée dans le joint de colle, n'est pas compatible avec les procédés classiques permettant de réaliser un découpage continu du joint de colle tel que notamment décrit dans le document EP 0 093 283.

Par suite, le document EP 2 610 097 décrit un dispositif de fixation réversible destiné à être noyé dans un joint de colle. Ce dispositif de fixation comporte des fils d'extraction traversant des plots formant un jeu d'excroissances.

Bien qu'efficace, ce dispositif de fixation nécessite de procéder au remplacement des plots une fois le joint de colle découpé. De plus, les extrémités des fils peuvent être difficiles à masquer.

Le document FR 3 068 404 décrit un assemblage comportant un joint de colle agencé à l'interface entre une première face d'un châssis et une deuxième face d'un portant. L'assemblage comporte des moyens d'aide au découpage du joint de colle comportant au moins un organe longiligne agencé au moins à proximité et autour d'un obstacle. L'organe longiligne est partiellement noyé à l'intérieur du joint de colle. L'organe longiligne comporte deux extrémités libres émergeant du joint de colle. Ces extrémités peuvent être difficiles à masquer. L'organe longiligne peut comporter au moins un fil voire une gaine passe-fil recevant le fil.

Le document US 2005/0200163 décrit aussi un système à corde intégrée.

La présente invention a pour objet un assemblage innovant visant à faciliter la dépose d'un panneau. Par exemple, un tel panneau peut être un parebrise ou une cloison.

L'invention vise ainsi un assemblage muni d'un panneau ainsi que d'un joint de colle et d'un portant, le panneau étant collé par le joint de colle au portant, ledit joint de colle étant interposé, par exemple mais non obligatoirement de manière étanche à l'air et à l'eau, entre un milieu interne et un milieu externe.

L'assemblage comporte au moins un tunnel traversant de part en part ledit joint de colle selon un axe transversal et reliant le milieu interne et le milieu externe, chaque tunnel étant totalement obturé de manière réversible par un obturateur, par exemple de manière étanche à l'eau et à l'air.

L'expression « panneau » peut désigner un organe comprenant une paroi, par exemple translucide ou transparente. Cette paroi peut comprendre une bordure collée au portant, ou encore le panneau peut comprendre un châssis solidaire de la paroi et muni d'une bordure collée au portant. En tout état de cause, une bordure de la paroi ou du châssis éventuel est ainsi collée au portant. Eventuellement, la bordure du panneau peut aussi être, de façon complémentaire, serrée contre des obstacles de type excroissances par des vis vissées dans des excroissances respectives. En particulier, le panneau peut être un parebrise ou un hublot. Le panneau se situe en outre entre le milieu interne et le milieu externe.

Par exemple, le joint de colle comporte un ou plusieurs tronçons. Le ou les tronçons collants peuvent comprendre un mastic, par exemple à base de caoutchouc liquide polysulfure apte à polymériser à température ambiante.

Dès lors, l'assemblage comporte un ou plusieurs tunnels. Indépendamment du nombre de tunnels, chaque tunnel est obturé par un obturateur, contrairement à une simple gaine. Chaque obturateur peut être disposé en élévation dans un espace situé entre le panneau et le portant, voire peut être en contact avec le panneau et /ou le portant. Chaque obturateur peut être isolant à l'eau et/ou à l'air, notamment dans le cas d'un parebrise.

Le joint de colle peut alors être continu ou discontinu. Dans le cas d'un joint de colle discontinu, un tunnel peut séparer longitudinalement deux tronçons collants du joint de colle. Dans tous les cas, chaque tunnel est agencé au sein du joint de colle, en mettant en communication fluidique le milieu interne et le milieu externe au travers du joint de colle entre le portant et le panneau.

Dans des conditions normales, l'assemblage reste en l'état, chaque tunnel étant obturé par son obturateur. Si le panneau doit être retiré, chaque obturateur est alors retiré par un opérateur. Un opérateur peut ensuite insérer facilement un organe coupant, tel qu'un couteau vibrant ou un fil coupant, par exemple du type « corde à piano », dans un ou des tunnels. Dès lors, un opérateur peut manoeuvrer l'organe coupant pour découper au moins localement le joint de colle. L'opérateur répète si nécessaire l'opération.

L'organe coupant n'est pas agencé en permanence dans le joint de colle mais n'est introduit dans un tunnel que lors d'un procédé de désolidarisation, après retrait d'un obturateur.

Le terme « totalement » signifie que tout le tunnel est obturé. L'obturateur peut alors isoler à l'eau et/ou à l'air le milieu interne par rapport au milieu externe.

Par conséquent, cet assemblage ne comporte pas un fil agencé en permanence dans le joint de colle. Cet assemblage ne comporte pas une extrémité d'un fil mobile dans le milieu interne ou dans le milieu externe et difficile à masquer. L'assemblage est ainsi discret. En outre, le procédé s'avère facile à mettre en oeuvre et non destructif pour le panneau et le portant.

L'assemblage peut par ailleurs comprendre une ou plusieurs des caractéristiques qui suivent.

Selon une possibilité, l'assemblage comporte au moins deux dits tunnels.

Par suite, lors d'un procédé de désolidarisation, un même fil peut rentrer plusieurs fois dans un même tunnel pour décrire une boucle autour d'une portion du joint de colle pour faciliter la découpe. Selon une possibilité, compatible avec la précédente, l'assemblage peut comporter au moins un obstacle, par exemple une zone galbée ou une excroissance disposée dans le joint de colle et s'étendant selon un axe en élévation entre le panneau et le portant. L'assemblage peut alors comporter deux dits tunnels disposés de part et d'autre de l'obstacle.

Par exemple, une excroissance forme ainsi un plot permettant de positionner correctement le panneau par rapport au portant. Une excroissance peut aussi participer à la fixation du panneau au portant, par exemple en coopérant avec une vis.

Selon un autre exemple, un obstacle peut prendre la forme d'une zone de l'assemblage comportant un galbe prononcé par rapport à d'autres zones de l'assemblage.

Dès lors, l'assemblage comporte deux tunnels autour d'un obstacle, une excroissance ou une zone à galbe prononcé, et non pas deux gaines. Un opérateur peut alors insérer facilement un fil coupant, par exemple du type « corde à piano », dans les tunnels. En particulier, le fil coupant peut rentrer plusieurs fois dans les deux tunnels pour décrire une boucle autour d'un obstacle. Dès lors, un opérateur peut tirer de manière classique sur le fil coupant pour découper localement le joint de colle. L'opérateur répète l'opération pour chaque obstacle.

Deux tunnels peuvent aussi être accolés à une excroissance, voire peuvent entourer une excroissance. Les deux tunnels forment ainsi un volume dépourvu de colle autour de l'excroissance concernée. Les tunnels peuvent ainsi protéger l'excroissance. Les tunnels peuvent notamment éviter d'introduire un résidu de colle dans un organe de vissage vissé à l'excroissance.

Selon une possibilité compatible avec les précédentes, l'assemblage peut comporter plusieurs obstacles, chaque obstacle étant disposé entre deux tunnels.

Le joint de colle peut être ainsi découpé facilement autour de chaque obstacle.

Selon une possibilité, le joint de colle peut décrire une ligne fermée autour dudit milieu interne.

Le joint de colle peut isoler, en dehors des tunnels et notamment à l'air et à l'eau, le milieu interne du milieu externe.

Selon une possibilité compatible avec la précédente, au moins un obturateur, voire plusieurs voire chaque obturateur, a une première couleur, ledit joint de colle ayant une deuxième couleur, ladite première couleur étant différente de la deuxième couleur.

De cette manière, un opérateur peut identifier facilement où se trouvent les obturateurs.

Selon une possibilité compatible avec les précédentes, au moins un obturateur, voire plusieurs voire chaque obturateur, comporte une mousse à cellules fermées, ladite mousse obturant un tunnel, ladite mousse pouvant être perforée par un pointeau.

Le pointeau peut éventuellement être aussi utilisé pour entailler le joint de colle autour du tunnel.

Une mousse peut être disposée dans chaque tunnel, et le cas échéant autour d'une excroissance. Concrètement, des pains de mousse peuvent être insérés dans le joint de colle lors de la solidarisation du panneau au portant pour former des tunnels obturés.

Dès lors, le joint de colle ne peut pas remplir des cellules de la mousse. La mousse peut en outre être compressée. La mousse peut avoir une hauteur réduite, de l'ordre de 3 millimètres par exemple. La mousse peut être autoadhésive pour coller au portant et / ou au panneau.

Par exemple, ladite mousse comporte un matériau du type polychloroprene.

Selon une possibilité compatible avec les précédentes, au moins un obturateur, voire plusieurs voire chaque obturateur, comporte une tirette obturant dans le tunnel correspondant, ladite tirette s'étendant au moins partiellement, voire entièrement, dans le tunnel et au moins dans ledit milieu interne ou externe.

Une telle tirette est un élément allongé enfoncé dans un tunnel et qui peut être retiré du tunnel si besoin. Eventuellement, la tirette peut être noyée dans le joint de colle lors de la pose de ce joint de colle. Une telle tirette peut être aisément enlevée par traction afin d'insérer un fil coupant ou autres dans les tunnels.

Eventuellement, la tirette peut comporter un matériau du groupe du silicone.

La tirette peut prendre la forme d'un tube cylindrique obturant un tunnel.

Alternativement, la tirette peut présenter des dimensions variables en allant du milieu interne au milieu externe pour favoriser son maintien au sein du joint de colle, même en présence de vibrations. Par exemple, la tirette peut comprendre une succession de secteurs à grands diamètres en saillie en élévation de secteurs à petite diamètres. La tirette présente alors une succession de bosses et de creux favorisant la stabilisation de la tirette entre le panneau et le portant.

La tirette peut ainsi être suffisamment rigide pour être extraite du joint de colle, et peut être étanche à l'air et à l'eau.

Selon une possibilité compatible avec les précédentes, au moins un obturateur, voire plusieurs voire chaque obturateur, comporte un bouchon disposé dans une gaine formant un dit tunnel.

Un tel bouchon peut être entièrement agencé dans le tunnel. Un opérateur peut alors utiliser une tige pour pousser le bouchon en dehors du tunnel.

Selon une possibilité compatible avec les précédentes, l'assemblage peut comporter un fil apte à traverser au moins un tunnel quand l'obturateur est retiré, le fil étant éventuellement configuré pour former une boucle et/ou pouvoir pénétrer plusieurs fois dans un même tunnel.

Dans des conditions normales, le fil peut être rangé dans un atelier. Lors d'une opération de désolidarisation, un opérateur peut insérer le fil dans un ou des tunnels pour couper le joint de colle. Le cas échéant, le fil peut former une boucle autour d'un obstacle en pénétrant plusieurs fois dans un même tunnel. En présence d'un tunnel cylindrique, le fil peut avoir un diamètre au moins inférieur à la moitié d'un diamètre du tunnel.

Un même fil peut servir à couper successivement plusieurs secteurs du joint de colle.

Selon une possibilité compatible avec les précédentes, au moins un tunnel, voire plusieurs voire chaque tunnel, s'étend uniquement en ligne droite.

Ainsi, il est aisé d'insérer le moment venu un fil dans un tunnel.

Ledit au moins un tunnel peut s'étendre selon un axe présentant un angle aigu ou droit avec le joint de colle. Ainsi, le tunnel est localement perpendiculaire ou sensiblement perpendiculaire au joint de colle.

Selon une possibilité compatible avec les précédentes, le portant peut comporter au moins un repère désignant un tunnel.

Ainsi, un opérateur sait précisément où se trouve un tunnel lors de l'opération de désolidarisation du panneau, notamment en présence d'un obturateur de type mousse.

Selon une possibilité compatible avec les précédentes, le panneau peut comporter au moins une marque désignant un tunnel.

Ainsi, un opérateur sait précisément où se trouve un tunnel lors de l'opération de désolidarisation du panneau, notamment en présence d'un obturateur de type mousse.

Selon une possibilité compatible avec les précédentes, l'assemblage peut comporter un patron à disposer sur ledit panneau ou ledit portant, ledit patron comportant au moins un symbole désignant un tunnel. Le patron peut comporter au moins un symbole par tunnel.

Ainsi, un opérateur sait précisément où se trouve un tunnel lors de l'opération de désolidarisation du panneau, notamment en présence d'un obturateur de type mousse.

Un même assemblage peut comprendre au moins un repère et/ou au moins une marque et/ou un patron pour repérer un ou des tunnels.

L'invention concerne par ailleurs un véhicule comportant un tel assemblage.

Le panneau comporte une paroi transparente ou translucide. Ainsi le panneau peut être un parebrise ou un hublot.

Alternativement, le panneau peut être un panneau plein. Le panneau peut par exemple être une cloison délimitant deux espaces.

Le véhicule peut être un aéronef.

L'invention vise aussi un procédé de solidarisation d'un panneau à un portant d'un tel assemblage, le procédé comprenant l'étape suivante : disposer le voire chaque obturateur dans un joint de colle entre le panneau et le portant, ledit joint de colle s'étendant entre le panneau et le portant.

L'invention vise aussi un procédé de désolidarisation d'un panneau à un portant d'un tel assemblage, le procédé comprenant les étapes suivantes : retirer le voire chaque obturateur, faire passer un fil coupant dans au moins un tunnel, exercer un effort sur le fil.

En particulier, le fil coupant peut passer au moins deux fois dans au moins un tunnel pour décrire une boucle autour d'un obstacle avant d'être tiré.

L'invention et ses avantages apparaîtront avec plus de détails dans le cadre de la description qui suit avec des exemples donnés à titre illustratif en référence aux figures annexées qui représentent :
la figure 1, une vue de dessus d'un assemblage selon l'invention, par exemple au sein d'un véhicule,
la figure 2, une représentation explicitant un assemblage muni de plusieurs obstacles disposés entre des tunnels,
la figure 3, une représentation d'un patron,
la figure 4, une coupe partielle en élévation d'un assemblage selon l'invention,
] la figure 5, une coupe partielle au niveau du joint de colle d'un assemblage selon l'invention ayant un obturateur en mousse en vue de dessus,
la figure 6, une coupe partielle au niveau du joint de colle d'un assemblage selon l'invention ayant un obturateur à tirette en vue de dessus,
la figure 7, une coupe partielle au niveau du joint de colle d'un assemblage selon l'invention ayant un obturateur à bouchon en vue de dessus, et
la figure 8, une représentation explicitant un procédé de désolidarisation.

Les éléments présents dans plusieurs figures distinctes sont affectés d'une seule et même référence.

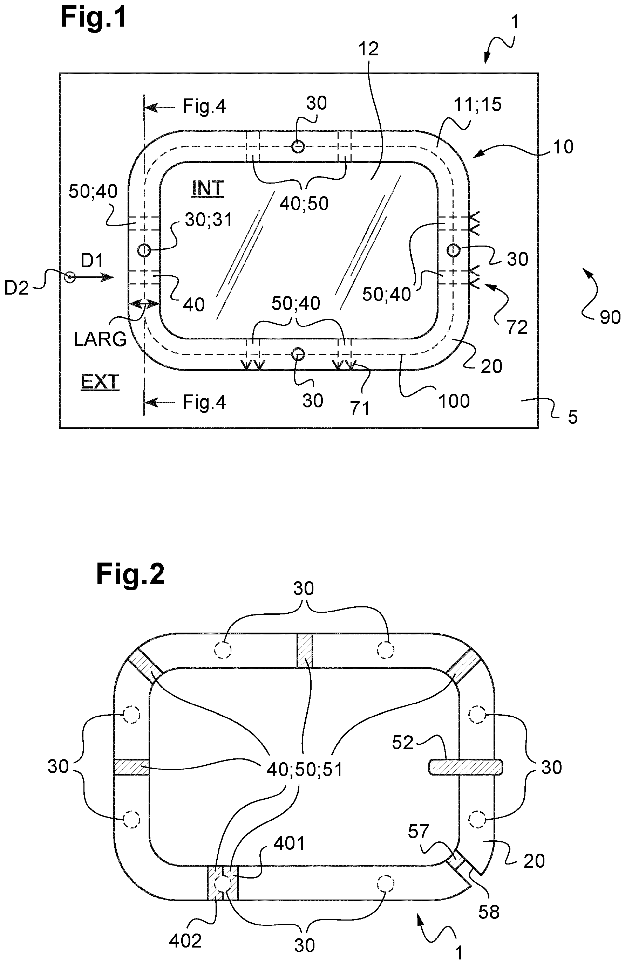

La figure 1 présente un assemblage 1 selon l'invention. Cet assemblage 1 peut être agencé au sein d'un véhicule 90, et par exemple au sein d'un aéronef voire en particulier d'un aéronef ayant une voilure tournante.

L'assemblage 1 comporte un panneau 10 et un portant 5 auquel est collé le panneau 10. Le panneau 10 peut être configuré pour obturer une ouverture 6 du portant 5.

Plus précisément, le panneau 10 peut comprendre une paroi 12. Cette paroi 12 peut être transparente, translucide ou pleine. Eventuellement, le panneau 10 est un parebrise ou un hublot. Eventuellement, le panneau 10 comporte un châssis 15 entourant la paroi 12.

En outre, le panneau 10 peut comprendre une bordure 11 à coller au portant 5. La bordure 11 s'étend le long une ligne fermée 100.

Selon la variante, la bordure 11 peut être une partie de la paroi 12 ou du châssis 15 du panneau 10.

Pour solidariser le panneau 10 au portant 5, l'assemblage 1 comporte un joint de colle 20 collant le panneau 10 au portant 5. La totalité du panneau 10 est rendue transparente sur la figure 1, indépendamment de sa nature, pour montrer le joint de colle 20.

Le joint de colle 20 et le panneau 10 sont situés à l'interface entre un premier milieu, dit « milieu interne INT » par commodité, et un deuxième milieu « dit milieu externe EXT » par commodité. Ainsi, le panneau 10 comporte une face interne au regard du milieu interne INT et une face externe au regard du milieu externe EXT. Dans le cas d'un véhicule 90, le joint de colle 20 peut séparer un milieu interne INT du véhicule 90, par exemple une cabine, du milieu extérieur EXT.

Le joint de colle 20 s'étend ainsi entre le milieu externe EXT et le milieu interne INT selon sa largeur LARG et un axe transversal D1. L'expression « axe transversal » désigne tout axe allant du milieu extérieur EXT au milieu intérieur INT en traversant le joint de colle 20.

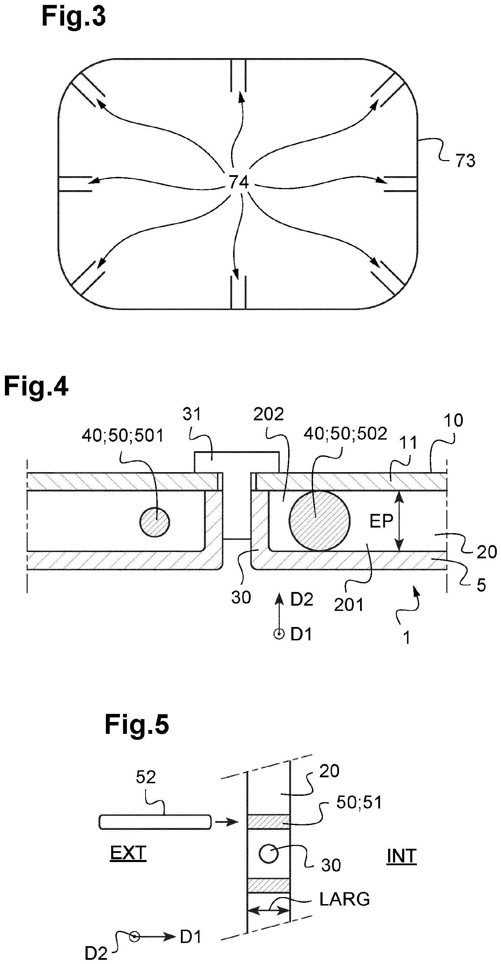

Le joint de colle 20 s'étend selon un axe en élévation D2 entre le portant 5 et le panneau 10 selon son épaisseur EP illustrée sur la figure 4. L'expression « axe en élévation » désigne tout axe allant du portant 5 au panneau 10 en traversant le joint de colle 20.

Le joint de colle 20 peut s'étendre le long de la ligne fermée 100. Par exemple, le joint de colle 20 peut s'étendre sur la totalité de la bordure 11. Le joint de colle 20 peut comprendre une matière isolante à l'air et à l'eau notamment, telle que le mastic connu sous l'appellation « PR » par exemple.

Par ailleurs, l'assemblage 1 peut, selon l'exemple illustré, comprendre au moins un obstacle 30. Les figures illustrent par commodité des obstacles du type d'une excroissance disposée dans le joint de colle 20. Cependant au moins une zone d'un portant et/ou d'un panneau convexe forme aussi un obstacle. Le terme « obstacle » désigne un objet ou une partie d'un objet formant un obstacle à la découpe du joint de colle.

Quelle que soit le nombre d'excroissances, chaque excroissance 30 s'étend selon un axe en élévation D2 entre le panneau 10 et le portant 5.

Au moins une voire plusieurs voire chaque excroissance 30 peut être une partie intégrante du panneau 10 ou du portant 5. Outre une fixation par collage, le panneau 10 peut aussi être serré par vissage par le biais d'une vis 31 vissée à une excroissance.

Selon un exemple, une excroissance 30 peut être intégrée au portant 5. Dès lors, le joint de colle 20 est positionné sur le portant 5 puis le panneau 10 est plaqué de manière à reposer sur l'excroissance 30. Une vis 31 est alors vissée à une excroissance 30, la tête de la vis 31 étant en appui sur la face externe du panneau 10. L'inverse est aussi possible en utilisant une vis ayant une tête en appui contre le portant 5 et vissée à une excroissance solidaire du panneau 10.

Alternativement, l'assemblage 1 ne comporte pas d'excroissances 30.

Selon un autre aspect, l'assemblage 1 comporte au moins un tunnel 40 ménagé dans le joint de colle 20, voire au moins deux tunnels 40 ménagés dans le joint de colle 20. Au moins un tunnel peut séparer deux tronçons du joint de colle 20. Le joint de colle 20 est alors discontinu.

En présence d'un obstacle et par exemple mais non exclusivement d'une excroissance, deux tunnels 40 peuvent être disposés de part et d'autre de l'obstacle 30, selon la ligne fermée 100 décrite par le joint de colle.

Selon l'exemple de la figure 1, chaque obstacle 30 est disposé entre deux tunnels 40 qui lui sont propres.

Selon l'exemple de la figure 2, un tunnel 40 peut être associé à deux obstacles 30.

Dans les deux cas, chaque obstacle 30 est disposé entre deux tunnels 40.

Selon une éventualité, deux tunnels peuvent se rejoindre en entourant conjointement une excroissance. Ainsi deux tunnels 401, 402 peuvent former un volume entourant une excroissance 301.

Quelle que soit la réalisation et en référence à la figure 1, à savoir en présence ou non d'excroissances et plus généralement d'obstacles 30, chaque tunnel 40 traverse de part en part le joint de colle 20 du milieu interne INT jusqu'au milieu externe EXT. Chaque tunnel 40 met ainsi en liaison fluidique le milieu interne INT et le milieu externe EXT. Chaque tunnel 40 peut s'étendre uniquement en ligne droite pour favoriser le passage d'un fil décrit par la suite. Par exemple, au moins un tunnel s'étend selon un axe présentant un angle sensiblement droit avec le joint de colle, et un angle droit selon la figure 1.

Afin de permettre à un opérateur de visualiser la position des tunnels 40, le portant 5 peut comporter au moins un repère 72 désignant un tunnel 40.

De manière alternative ou complémentaire, le panneau 10 peut comporter au moins une marque 71 désignant un tunnel 40.

De manière alternative ou complémentaire et en référence à la figure 3, l'assemblage 1 peut comporter un patron 73. Le patron 73 peut être configuré pour être posé sur le panneau 10 ou sur le portant 5 lors d'un procédé visant à désolidariser le panneau 10 du portant 5. Ce patron 73 comporte au moins un symbole 74 désignant au moins un tunnel 40.

Selon un autre aspect et en référence à la figure 4, chaque tunnel 40 est obturé par un obturateur 50 amovible dédié. Le terme « amovible » signifie que l'obturateur peut être retiré pour libérer le tunnel correspondant.

Lors d'un procédé de solidarisation du panneau 10 au portant 5, lorsque le joint de colle 20 est appliqué, chaque obturateur 50 est mis en place au sein du joint de colle 20. Un obturateur 501 peut être noyé dans le joint de colle. Selon un autre exemple, un obturateur 502 peut être interposé entre deux tronçons 201, 202 du joint de colle, cet obturateur 502 s'étendant en élévation du portant 5 jusqu'au panneau 10. Cette opération permet d'obtenir, en une étape, un tunnel 40 obturé par un obturateur 50.

La pose des obturateurs 50 dans le joint de colle 20 peut être relativement facile à réaliser, notamment lorsque les tunnels 40 s'étendent seulement en ligne droite.

Par ailleurs, au moins un obturateur 50 peut avoir une première couleur différente d'une deuxième couleur du joint de colle 20 pour pouvoir être facilement repéré. Par exemple, le joint de colle 20 comporte un mastic de couleur noire alors qu'un obturateur 50 a une couleur orange.

Les obturateurs 50 sont en outre réalisés dans des matériaux permettant de libérer les tunnels 40 lors d'un procédé de désolidarisation. Ces matériaux sont par exemple choisis pour ne pas être dégradés par le joint de colle 20 et pour pouvoir être enlevés. Ces matériaux sont aussi choisis pour ne pas dégrader le joint de colle 20.

Selon l'exemple illustré sur la figure 5, un obturateur 50 peut comporter une mousse 51 par exemple à cellules fermées, isolante à l'air et à l'eau. Dès lors, un bâtonnet ou un pain de mousse 51 peut être disposé dans le joint de colle 20 lors du procédé de solidarisation. Ainsi, un opérateur obtient un tunnel 40 obturé par la mousse 51. Eventuellement, la mousse peut s'étendre uniquement au sein du joint de colle 20 ou peut comporter un tronçon s'étendant dans le milieu interne INT ou dans le milieu externe EXT.

Lors d'un procédé de désolidarisation, cette mousse 51 peut être perforée avec un pointeau 52, tel qu'une pointe par exemple, pour libérer le tunnel.

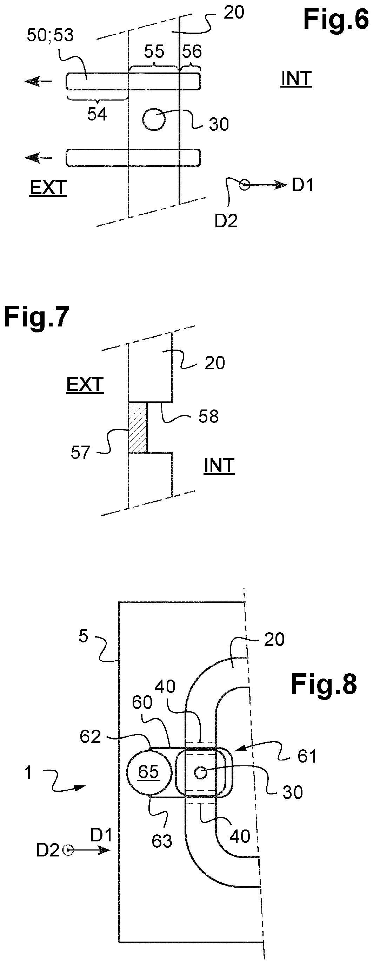

Selon l'exemple illustré sur la figure 6, au moins un obturateur 50 peut comporter une tirette 53 obturant le tunnel 40 correspondant.

La tirette 53 peut être disposée dans le joint de colle 20 lors du procédé de solidarisation. La tirette 53 comprend un tronçon central 55 s'étendant dans un tunnel 40. De plus, la tirette 53 comporte au moins un tronçon externe 54 s'étendant dans le milieu externe EXT et/ou un tronçon interne 56 s'étendant dans le milieu interne INT. Favorablement, la tirette 53 comporte un tronçon interne 56 non visible à partir du milieu externe EXT.

Lors d'un procédé de désolidarisation, un opérateur peut saisir le tronçon externe 54 ou le tronçon interne 56 afin d'exercer une force sur la tirette 53 pour l'extraire du tunnel 40.

Selon l'exemple illustré sur la figure 7, au moins un obturateur 50 peut comporter une gaine 58 traversant le joint de colle. Un bouchon 57 est alors inséré dans la gaine 58.

Sur un même assemblage, au moins un obturateur 50 peut comporter de la mousse 51, au moins un autre obturateur 50 peut comporter une tirette 53 et/ou au moins un autre obturateur 50 peut comporter un bouchon 57.

Par ailleurs et en référence à la figure 8, l'assemblage 1 peut comporter un fil 60, par exemple de type corde à piano. Le fil n'est pas agencé entre le portant et le panneau en dehors d'une phase de désolidarisation.

Durant le procédé de désolidarisation, chaque tunnel 40 est libéré de son obturateur 50, en utilisant un pointeau en présence d'un obturateur en mousse 51 ou en tirant ou poussant sur la tirette 53 éventuelle.

Le fil 60 est alors inséré dans un tunnel 40 de manière à traverser le joint de colle 20 du milieu externe EXT jusqu'au milieu interne INT. Par exemple, une aiguille peut être utilisée pour insérer le fil 60 dans un tunnel 40 et lui faire traverser ce tunnel 40.

Eventuellement, un ou deux opérateurs peuvent saisir les deux extrémités 62, 63 du fil 60 pour le déplacer et cisailler le joint de colle 20.

Cependant, l'opérateur peut aussi faire passer le fil 60 dans un autre tunnel 40 afin que les deux extrémités 62, 63 se trouvent soit dans le milieu interne INT soit dans le milieu externe EXT. L'opérateur peut alors soit exercer des efforts sur les extrémités 62, 63 soit attacher les extrémités 62, 63 à un outil 65 usuel, tel qu'un enrouleur par exemple, pour tirer sur le fil 60 et cisailler le joint de colle 20.

Eventuellement et conformément à l'exemple illustré, chaque tunnel 40 peut être configuré pour pouvoir accueillir plusieurs fils 60 ou plusieurs fois un même fil 60. Ainsi, le fil 60 peut décrire une boucle 61 autour du joint de colle 20 et le cas échéant autour d'un obstacle 30. Une telle boucle 61 permet de faciliter la découpe du joint de colle 20.

Cette opération peut être réalisée plusieurs fois pour découper la totalité du joint de colle 20.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Assemblage (1) muni d'un panneau (10) ainsi que d'un joint de colle (20) et d'un portant (5), le panneau (10) étant collé par le joint de colle (20) au portant (5), ledit joint de colle (20) étant interposé entre un milieu interne (INT) et un milieu externe (EXT),
**caractérisé en ce que** ledit assemblage (1) comporte au moins un tunnel (40) traversant de part en part ledit joint de colle (20) selon un axe transversal (D1) et reliant le milieu interne (INT) et le milieu externe (EXT), chaque tunnel (40) étant totalement obturé de manière réversible par un obturateur (50).

2. Assemblage selon la revendication 1,
**caractérisé en ce que** ledit assemblage (1) comporte au moins deux dits tunnels (40).

3. Assemblage selon la revendication 2,
caractérisé en ce ledit assemblage (1) comporte au moins un obstacle (30), ledit assemblage (1) comportant deux dits tunnels (40) disposés de part et d'autre dudit au moins un obstacle (30).

4. Assemblage selon la revendication 3,
**caractérisé en ce que** ledit assemblage (1) comporte plusieurs obstacles (30), chaque obstacle (30) étant disposé entre deux tunnels (40).

5. Assemblage selon l'une quelconque des revendications 1 à 4,
**caractérisé en ce que** ledit joint de colle (20) décrit une ligne fermée autour dudit milieu interne (INT).

6. Assemblage selon l'une quelconque des revendications 1 à 5,
**caractérisé en ce qu'**au moins un obturateur (50) a une première couleur, ledit joint de colle (20) a une deuxième couleur, ladite première couleur étant différente de la deuxième couleur.

7. Assemblage selon l'une quelconque des revendications 1 à 6, **caractérisé en ce qu'**au moins un obturateur (50) comporte une mousse (51) à cellules fermées, ladite mousse (51) obturant un tunnel (40).

8. Assemblage selon l'une quelconque des revendications 1 à 7, **caractérisé en ce qu'**au moins un obturateur (50) comporte une tirette (53) obturant le tunnel (40) correspondant, ladite tirette (53) s'étendant au moins partiellement dans le tunnel (40) et au moins dans ledit milieu interne (INT) ou externe(EXT).

9. Assemblage selon l'une quelconque des revendications 1 à 8, **caractérisé en ce qu'**au moins un obturateur (50) comporte un bouchon (57) disposé dans une gaine (58) formant un dit tunnel.

10. Assemblage selon l'une quelconque des revendications 1 à 9, **caractérisé en ce que** ledit assemblage (1) comporte un fil (60) apte à traverser ledit au moins un tunnel (40) quand ledit obturateur (50) est retiré, le fil (60) étant configuré pour pouvoir pénétrer plusieurs fois dans un même tunnel (40).

11. Assemblage selon l'une quelconque des revendications 1 à 10,
**caractérisé en ce que** ledit au moins un tunnel (40) s'étend uniquement en ligne droite.

12. Assemblage selon l'une quelconque des revendications 1 à 11,
**caractérisé en ce que** ledit au moins un tunnel (40) s'étend selon un axe présentant un angle aigu ou droit avec le joint de colle.

13. Assemblage selon l'une quelconque des revendications 1 à 12,
**caractérisé en ce que** ledit portant (5) comporte au moins un repère (72) désignant ledit au moins un tunnel (40) ou au moins une marque (71) désignant ledit au moins un tunnel, ou un patron (73) à disposer sur ledit panneau (10) ou ledit portant (5), ledit patron (73) comportant au moins un symbole (74) désignant ledit au moins un tunnel (40).

14. Véhicule (90) comportant un assemblage (1),
**caractérisé en ce que** ledit assemblage (1) est selon l'une selon l'une quelconque des revendications 1 à 13.

15. Véhicule selon la revendication 14,
**caractérisé en ce que** ledit panneau (10) comporte une paroi (12) transparente ou translucide.

16. Véhicule selon l'une quelconque des revendications 14 à 15, **caractérisé en ce que** ledit véhicule (90) est un aéronef.

17. Procédé de solidarisation d'un panneau (10) à un portant (5) d'un assemblage (1) selon l'une quelconque des revendications 1 à 13, le procédé comprenant l'étape suivante : disposer ledit obturateur (50) dans un joint de colle (20) entre le panneau (10) et le portant (5), ledit joint de colle (20) s'étendant entre le panneau (10) et le portant (5).

18. Procédé de désolidarisation d'un panneau (10) à un portant (5) d'un assemblage (1) selon l'une quelconque des revendications 1 à 13, le procédé comprenant les étapes suivantes : retirer ledit obturateur (50), faire passer un fil (60) dans ledit au moins un tunnel (40), exercer un effort sur le fil (60).

## Patentansprüche

1. Baugruppe (1) mit einer Platte (10) und einer Klebeverbindung (20) sowie einem Träger (5), wobei die Platte (10) durch die Klebeverbindung (20) an dem Träger (5) verklebt ist und die Klebeverbindung (20) zwischen einem inneren Milieu (INT) und einem äußeren Milieu (EXT) eingefügt ist,
**dadurch gekennzeichnet, dass** die Baugruppe (1) mindestens einen Tunnel (40) umfasst, der die Klebeverbindung (20) entlang einer Querachse (D1) durchläuft und das innere Milieu (INT) und das äußere Milieu (EXT) verbindet, wobei jeder Tunnel (40) durch einen Verschluss (50) vollständig und reversibel verschlossen ist.

2. Baugruppe nach Anspruch 1,
**dadurch gekennzeichnet, dass** die Baugruppe (1) mindestens zwei der Tunnel (40) umfasst.

3. Baugruppe nach Anspruch 2,
**dadurch gekennzeichnet, dass** die Baugruppe (1) mindestens ein Hindernis (30) aufweist, wobei die Baugruppe (1) zwei Tunnel (40) aufweist, die auf beiden Seiten des mindestens einen Hindernisses (30) angeordnet sind.

4. Baugruppe nach Anspruch 3,
**dadurch gekennzeichnet, dass** die Baugruppe (1) mehrere Hindernisse (30) aufweist, wobei jedes Hindernis (30) zwischen zwei Tunneln (40) angeordnet ist.

5. Baugruppe nach einem der Ansprüche 1 bis 4,
**dadurch gekennzeichnet, dass** die Klebeverbindung (20) eine geschlossene Linie um das innere Milieu (INT) herum beschreibt.

6. Baugruppe nach einem der Ansprüche 1 bis 5,
**dadurch gekennzeichnet, dass** mindestens ein Verschluss (50) eine erste Farbe aufweist und die Klebeverbindung (20) eine zweite Farbe aufweist, wobei sich die erste Farbe von der zweiten Farbe unterscheidet.

7. Baugruppe nach einem der Ansprüche 1 bis 6,
**dadurch gekennzeichnet, dass** mindestens ein Verschluss (50) einen geschlossenzelligen Schaumstoff (51) umfasst, wobei der Schaumstoff (51) einen Tunnel (40) verschließt.

8. Baugruppe nach einem der Ansprüche 1 bis 7,
**dadurch gekennzeichnet, dass** mindestens ein Verschluss (50) eine Zuglasche (53) aufweist, die den entsprechenden Tunnel (40) verschließt, wobei sich die Zuglasche (53) mindestens teilweise in den Tunnel (40) und mindestens in das innere (INT) oder äußere (EXT) Medium erstreckt.

9. Baugruppe nach einem der Ansprüche 1 bis 8,
**dadurch gekennzeichnet, dass** mindestens ein Verschluss (50) einen Stopfen (57) umfasst, der in einer einen besagten Tunnel bildenden Hülse (58) angeordnet ist.

10. Baugruppe nach einem der Ansprüche 1 bis 9,
**dadurch gekennzeichnet, dass** die Baugruppe (1) einen Draht (60) umfasst, der geeignet ist, den mindestens einen Tunnel (40) zu durchqueren, wenn der Verschluss (50) entfernt ist, wobei der Draht (60) konfiguriert ist, um mehrmals in einen gleichen Tunnel (40) eindringen zu können.

11. Baugruppe nach einem der Ansprüche 1 bis 10,
**dadurch gekennzeichnet, dass** der mindestens eine Tunnel (40) sich ausschließlich in einer geraden Linie erstreckt.

12. Baugruppe nach einem der Ansprüche 1 bis 11,
**dadurch gekennzeichnet, dass** sich der mindestens eine Tunnel (40) entlang einer Achse erstreckt, die einen spitzen oder rechten Winkel mit der Klebeverbindung bildet.

13. Baugruppe nach einem der Ansprüche 1 bis 12,
**dadurch gekennzeichnet, dass** der Träger (5) mindestens eine Kennzeichnung (72), die den mindestens einen Tunnel (40) bezeichnet, oder mindestens eine Marke (71), die den mindestens einen Tunnel bezeichnet, oder eine Schablone (73) zur Anbringung an der Platte (10) oder dem Träger (5) aufweist, wobei die Schablone (73) mindestens ein Symbol (74) aufweist, das den mindestens einen Tunnel (40) bezeichnet.

14. Verkehrsmittel (90) mit einer Baugruppe (1),
**dadurch gekennzeichnet, dass** die Baugruppe (1) nach einem der Ansprüche 1 bis 13 ist.

15. Verkehrsmittel nach Anspruch 14,
**dadurch gekennzeichnet, dass** die Platte (10) eine durchsichtige oder durchscheinende Wand (12) aufweist.

16. Verkehrsmittel nach einem der Ansprüche 14 bis 15,
**dadurch gekennzeichnet, dass** das Verkehrsmittel (90) ein Luftfahrzeug ist.

17. Verfahren zum Verbinden einer Platte (10) mit einem Träger (5) einer Baugruppe (1) nach einem der Ansprüche 1 bis 13, wobei das Verfahren den folgenden Schritt umfasst: Anordnen des Verschlusses (50) in einer Klebeverbindung (20) zwischen der Platte (10) und dem Träger (5), wobei sich die Klebeverbindung (20) zwischen der Platte (10) und dem Träger (5) erstreckt.

18. Verfahren zum Trennen einer Platte (10) von einem Träger (5) einer Baugruppe (1) nach einem der Ansprüche 1 bis 13, wobei das Verfahren die folgenden Schritte umfasst: Entfernen des Verschlusses (50), Führen eines Drahtes (60) durch den mindestens einen Tunnel (40), Ausüben einer Kraft auf den Draht (60).

## Claims

1. Assembly (1) provided with a panel (10), as well as a glue joint (20) and a support (5), the panel (10) being glued by the glue joint (20) to the support (5), said glue joint (20) being interposed between an internal (INT) environment and an external (EXT) environment,
**characterized in that** said assembly (1) comprises at least one tunnel (40) passing all the way through said glue joint (20) along a transverse axis (D1) and connecting the internal (INT) environment and the external (EXT) environment, each tunnel (40) being completely blocked in a reversible manner by a stopper (50).

2. Assembly according to Claim 1,
**characterized in that** said assembly (1) comprises at least two said tunnels (40).

3. Assembly according to Claim 2,
**characterized in that** said assembly (1) comprises at least one obstacle (30), said assembly (1) comprising two said tunnels (40) disposed on either side of said at least one obstacle (30).

4. Assembly according to Claim 3,
**characterized in that** said assembly (1) comprises multiple obstacles (30), each obstacle (30) being disposed between two tunnels (40).

5. Assembly according to any one of Claims 1 to 4,
**characterized in that** said glue joint (20) describes a closed line around the internal (INT) environment.

6. Assembly according to any one of Claims 1 to 5,
**characterized in that** at least one stopper (50) is of a first colour, said glue joint (20) is of a second colour, said first colour being different from the second colour.

7. Assembly according to any one of Claims 1 to 6,
**characterized in that** at least one stopper (50) comprises a closed-cell foam (51), said foam (51) blocking a tunnel (40).

8. Assembly according to any one of Claims 1 to 7,
**characterized in that** at least one stopper (50) comprises a pull stopper (53) blocking the corresponding tunnel (40), said pull stopper (53) extending at least partially in the tunnel (40) and at least into said internal (INT) environment or external (EXT) environment.

9. Assembly according to any one of Claims 1 to 8,
**characterized in that** at least one stopper (50) comprises a plug (57) disposed in a duct (58) forming a said tunnel.

10. Assembly according to any one of Claims 1 to 9, **characterized in that** said assembly (1) comprises a wire (60) capable of crossing said at least one tunnel (40) when said stopper (50) is removed, the wire (60) being configured to allow it to enter a same tunnel (40) multiple times.

11. Assembly according to any one of Claims 1 to 10,
**characterized in that** said at least one tunnel (40) extends only in a straight line.

12. Assembly according to any one of Claims 1 to 11,
**characterized in that** said at least one tunnel (40) extends along an axis at an acute or right angle to the glue joint.

13. Assembly according to any one of Claims 1 to 12,
**characterized in that** said support (5) comprises at least one locator (72) designating said at least one tunnel (40) or at least one mark (71) designating said at least one tunnel, or a pattern (73) to be disposed on said panel (10) or said support (5), said pattern (73) comprising at least one symbol (74) designating said at least one tunnel (40).

14. Vehicle (90) comprising an assembly (1),
**characterized in that** said assembly (1) is according to one, according to any one, of Claims 1 to 13.

15. Vehicle according to Claim 14,
**characterized in that** said panel (10) comprises a transparent or translucent wall (12).

16. Vehicle according to any one of Claims 14 to 15,
**characterized in that** said vehicle (90) is an aircraft.

17. Method for securing a panel (10) to a support (5) of an assembly (1) according to any one of Claims 1 to 13, the method comprising the following step: disposing said stopper (50) in a glue joint (20) between the panel (10) and the support (5), said glue joint (20) extending between the panel (10) and the support (5).

18. Method for detaching a panel (10) from a support (5) of an assembly (1) according to any one of Claims 1 to 13, the method comprising the following steps: removing said stopper (50), inserting a wire (60) through said at least one tunnel (40), applying a force to the wire (60).
